# EUROPEAN PATENT APPLICATION

(11) **EP 4 651 338 A1**
(43) Date of publication of application: **19.11.2025**
(21) Application number: 25176739.8
(22) Date of filing: 15.05.2025
(51) Int. Cl.: H02J 7/00, H02J 7/02

(54) **BATTERY CHARGING**

(30) Priority: 17.05.2024 GB 202407088
(71) Applicant: Fortescue Zero Limited, Kidlington, England OX5 1GB (GB)
(72) Inventor: DOLINSEK, Greg, Kidlington, OX5 1GB (GB)
(74) Representative: HGF

(57) **Abstract**

Aspects of the present invention relate to a battery charging system comprising a first charging sub-system and a second charging sub-system. The first charging sub-system comprises a first charging connection point and a first charging circuit. The second charging sub-system comprises a second charging connection point and a second charging circuit. The first charging connection point is electrically connected with the first charging circuit and the second charging connection point is electrically connected with the second charging circuit. The first and second charging circuits are arranged to be electrically connected to a common battery pack. The first charging circuit is arranged to be selectively electrically connected, via the first charging connection point, with a first charger unit circuit of a first charger unit of a battery charger system. The second charging circuit is arranged to be selectively electrically connected, via the second charging connection point, with a second charger unit circuit of a second charger unit of the battery charger system. This permits charging of the common battery pack with current simultaneously delivered from the first and second charger units via the first and second charging sub-systems respectively.

## Description

### TECHNICAL FIELD

The present disclosure relates to battery charging. Aspects of the invention relate to a battery charging system, a battery charger system, a vehicle, a method of charging a battery pack, a computer program, a non-transitory computer readable storage medium and a signal.

### BACKGROUND

Battery technology and battery charging technology is currently progressing rapidly. Further, battery technology is being considered for and used in new industries which may favour or necessitate further developments and/or adjustments to existing technology. For instance, it may be that where very heavy vehicles are electrically powered for their travel, that very high capacity batteries are used. In such cases, high capacity charging may be desirable in order to avoid excessively long charging times and corresponding down-time of the vehicles. It may be for instance that to make a battery powered haul truck commercially desirable, that it is rechargeable within approximately 30minutes. Existing and even future technology, especially when driven by conformance with an industry standard, may not meet such needs. Such considerations might suggest the design of a fully or largely bespoke charging system. Nonetheless, with such systems, it may be difficult to conform with existing and even emerging standards in the battery charging field.

It is an aim of the present invention to address one or more of the disadvantages associated with the prior art.

### SUMMARY OF THE INVENTION

According to a first aspect of the invention, there is provided a battery charging system comprising a first charging sub-system and a second charging sub-system, the first charging sub-system comprising:
a first charging connection point; and
a first charging circuit, and

the second charging sub-system comprising:
   a second charging connection point; and
   a second charging circuit,

   the first charging connection point being electrically connected with the first charging circuit and the second charging connection point being electrically connected with the second charging circuit,
   where the first and second charging circuits are arranged to be electrically connected to a common battery pack and where further,
      the first charging circuit is arranged to be selectively electrically connected, via the first charging connection point, with a first charger unit circuit of a first charger unit of a battery charger system and the second charging circuit is arranged to be selectively electrically connected, via the second charging connection point, with a second charger unit circuit of a second charger unit of the battery charger system,
to thereby permit charging of the common battery pack with current simultaneously delivered from the first and second charger units via the first and second charging sub-systems respectively.

The first and second charger units may be provided in a single package. More specifically, it may be that the battery charger system is distinct from a first charger unit alone only or predominantly in that it provides a second charging connection (which may be referred to as a second charger unit connection point). This may increase (e.g. double) the charging capacity provided by the battery charger system.

Whilst the battery pack may have individual batteries and/or battery sub-packs, all of the batteries within the pack remain connected (e.g. in series and/or parallel) during the charging and optionally during use. The battery charging system may allow for power to be delivered to the battery pack at any given time that is beyond that designed/intended for a given charging unit and/or charging sub-system and/or charging protocols, whilst still using the given type of charging unit and/or charging sub-system and/or charging protocols. This may be advantageous where for instance the given charging unit and/or charging sub-system and/or control protocols are conventional and/or industry standard, but would normally be incapable of supplying a power at any given time capable of achieving a desired charging rate.

In some embodiments, the first charging sub-system and the second charging sub-system are structurally substantially identical.

This may reduce complexity and/or cost and better facilitate adherence to one or more standards applying to the charging system.

In some embodiments, the first charging sub-system comprises a first processing system arranged to control charging that occurs via both the first and second charging sub-systems, the control comprising controlling completion of the first charging circuit and the second charging circuit via actuation of a first switching system of the first charging sub-system and a second switching system of the second charging sub-system respectively.

Control of the actuations of the first switching system of the first charging sub-system and the second switching system of the second charging sub-system may be in accordance with sensed data and/or completion of pre-defined tasks (e.g. locking together of the first and second charging connection points with respective cooperating first and second charger unit connection points of the first and second charger units and/or detection of correct DC voltage).

The first processing system may also or alternatively perform any one or more of the following (which may be considered at least part of controlling charging via both the first and second charging sub-systems):
∘ Communicating/coordinating with the battery charger system, for instance by:
   ▪ Sending signal(s) to and/or receiving signal(s) from the battery charger system to communicate operating limits and parameters of charging;
   ▪ Sending a pre-charge request signal(s) to the battery charger system with a requested initial current and/or voltage;
   ▪ Sending of a power delivery request signal to the battery charger system;
   ▪ Receiving a ready confirmation signal from the battery charger system;
   ▪ Sending a proceed signal to the battery charger system;
   ▪ Requesting of the battery charger system an adjustment to the voltage/current being delivered;
∘ Determination of correct voltage and/or current being delivered;
∘ Determining power delivery split between the first and second charger units;
∘ Locking and/or unlocking of the first and second charging connection points with respective cooperating first and second charger unit connection points of the first and second charger units;
∘ Controlling breaking of the first charging circuit and the second charging circuit via actuation of the first switching system of the first charging sub-system and the second switching system of the second charging sub-system respectively. This may for instance simply be at the end of charging and/or where an anomalous/undesirable situation is recognised in which case the disconnection may be performed for safety and/or to prevent/mitigate damage.

Charging control in accordance with any combination of the possibilities described herein may be performed by a first control processor of the first processing system.

In some embodiments, the battery charging system comprises a first communication line extending between the first processing system and the first charging connection point and arranged to be used by the first processing system to perform communication with the first charger unit via a selectively made electrical connection of the first communication line with a corresponding second communication line of the first charger unit at the first charging connection point, the first processing system control of the charging via both the first and second charging sub-systems being performed at least in part via the first and second communication lines.

First processing system control of charging via the first charging sub-system using such a communication line may be part of the design of an existing architecture (e.g. the first charging connection point and/or a first charger unit connection point of the first charger unit arranged to cooperate/mate with that first charging connection point to provide electrical connections and/or the first charging circuit and/or the first processing system and/or the first charger unit). Consequently, the desired control may be more readily implemented. Extending this control so as to include control over charging via the second charging sub-system may allow for coordinated control of the charging process.

The first and second communication lines may constitute a control pilot line. The first and/or the second communication line may be a charge enable line.

In some embodiments, the battery charging system comprises at least one first sensor arranged to monitor a connection of the first charging sub-system and the first charger unit via the first charging connection point and/or charging conducted via the first charging connection point, each of the at least one first sensors being arranged to send one/or more first signals indicative of a first monitored parameter to the first processing system.

First processing system receipt of sensor data to monitor the state and/or health of connection and/or state and/or health and/or progress of charging via the first charging sub-system may be part of the design of an existing architecture (e.g. the first sensor(s) and/or the first charging connection point and/or a first charger unit connection point of the first charger unit arranged to cooperate/mate with that first charging connection point to provide electrical connections and/or the first charging circuit and/or the first processing system and/or the first charger unit). Consequently, the desired receipt of sensor data and monitoring may be more readily implemented.

In addition, the first processing system may perform additional monitoring and/or communication (e.g. with the first charger unit) and/or control in accordance with the received data. The first charger unit may determine action(s) (e.g. those discussed in the paragraph below) to be taken by the first processing system (e.g. in one or more of those cases discussed below concerning monitoring of voltage, current, temperature and lock status).

The received data may for instance be indicative of one or more of:
- Voltage across supply terminals of the first charger unit. If a threshold indicative of a fault in this regard is exceeded, (e.g. 60V) the first processing system may shut-down charging;
- Type of current (e.g. DC or AC) supplied by the first charger unit. If the first processing system consequently determines an incompatibility with the battery charging system, it may prevent charging;
- Discrepancy (if any) between requested current from the first charger unit and current delivered by the first charger unit. The first processing system may shut-down charging if the discrepancy exceeds a threshold indicative of performance outside of tolerance;
- Connection integrity (e.g. the integrity of the first charging circuit). If the first processing system consequently determines an integrity fault, it may prevent charging or shut-down charging;
- First communication line integrity. If the first processing system consequently determines an integrity fault of the first communication line, it may prevent charging or shut-down charging;
- Electrical isolation of the battery charging system. If the first processing system consequently determines an isolation failure, it may prevent charging or shut-down charging.
- Lock status of the first connection point with a cooperating first charger unit connection point of the first charger unit;
- Temperature of the first charging connection point and/or first charger unit connection point. If the first processing system consequently determines one or more temperatures out of tolerance, it may prevent charging or shut-down charging or de-rate charging.

Shut-downs may for instance be achieved by breaking the first charging circuit using the first switching system or reducing requested current to 0A (e.g. within a given timeframe) and then breaking the first charging circuit using the first switching system.

It may be a first monitoring processor of the first processing system that receives and monitors and optionally performs additional monitoring and/or communication (e.g. with the first charger unit) and/or control as described above.

It may be that the first control processor and the first monitoring processor are distinct processors.

In some embodiments, the second charging sub-system comprises a second processing system that is the same as the first processing system but having charging control functionality disabled to complement charging control via both the first and second charging sub-systems being performed by the first processing system.

It may be in particular that charging control for charging occurring via the second charging sub-system, which might normally be expected to be performed by the second processing system, is not in fact performed by the second processing system, but is instead added to the responsibility of the first processing system. This may prevent disparate processing systems controlling different elements of the same charging activity, which might otherwise conflict a cause charging to fail. In particular, it may be desirable or necessary for there to be uniformity in charging control decisions/operations with respect to power delivered via both the first charging sub-system and the second charging system. Additionally or alternatively, it may be desirable and/or necessary for there to be balance in power delivery from the first and second charging sub-systems.

It may be that the disabling of the charging control functionality of the second processing system is achieved by deactivation (which may be permanent) of a second control processor of the second processing system. The second control processor may be equivalent to the first control processor of the first processing system.

In some embodiments, the battery charging system comprises a third communication line extending between the second processing system and the second charging connection point and arranged to be used by the second processing system to perform communication with the second charger unit via a selectively made electrical connection of the third communication line with a corresponding fourth communication line of the second charger unit at the second charging connection point and where the second processing system is arranged to use the third and fourth communication lines to send a signal to the second charger unit indicating that the second charging sub-system to which it belongs is the second of two charging sub-systems of the battery charging system.

The signal sent by the second processing system to the second charger unit may for instance be sent at the point of connection of the second charging connection point and second charger unit connection point, or else prior to the commencement of charging.

The sending of such a signal may represent a re-purposing of the third and fourth communication lines, which might otherwise have been conventionally used for communications for second processing system control of charging via the second charging sub-system.

The indication that the second charging sub-system is the second of two may be used by the battery charger system as a basis to increase the total maximum power deliverable to the battery charging system by the battery charger system and/or to notify a power generation network (e.g. a national grid) of anticipated increased demand corresponding to simultaneous charging using both the first and second charger units (where the first and second charger supply power for charging from the power generation network).

In some embodiments, the battery charging system comprises at least one second sensor arranged to monitor a connection of the second charging sub-system and the second charger unit via the second charging connection point and/or charging conducted via the second charging connection point, each of the at least one second sensors being arranged to send one/or more second signals indicative of a second monitored parameter to the second processing system.

Thus, it may be that despite control functionality of the second processing system being curtailed in favour of the control functionality of the first processing system, the second processing system may nonetheless maintain monitoring functionality for its side (the second charging sub-system) of the battery charging system.

Second processing system receipt of sensor data to monitor state and/or health of connection and/or state and/or health and/or progress of a charging via the second charging sub-system may be part of the design of an existing architecture (e.g. the second sensor(s) and/or the second charging connection point and/or a second charger unit connection point of the second charger unit arranged to cooperate/mate with that second charging connection point to provide electrical connections and/or the second charging circuit and/or the second processing system and/or the second charger unit). Consequently, the desired receipt of sensor data and monitoring may be more readily implemented.

In addition, the second processing system may perform additional monitoring and/or communication (e.g. with the second charger unit) and/or control in accordance with the received data. The second processing system may send the data it receives (or conclusions it draws from them) to the first processing system, which may take action accordingly. Further, The first charger unit may determine action(s) (e.g. those discussed in the paragraph below) to be taken by the first processing system (e.g. in one or more of those cases discussed below concerning monitoring of voltage, current, temperature and lock status).

The received data may for instance be indicative of one or more of:
- Voltage across supply terminals of the second charger unit. If a threshold is exceeded that is indicative of a fault (e.g. 60V) the second processing system may it may notify the first processing system which may shut-down charging;
- Type of current (e.g. DC or AC) supplied by the second charger unit. If the second processing system consequently determines an incompatibility with the battery charging system, it may notify the first processing system which may prevent charging;
- Discrepancy (if any) between requested current from the second charger unit and current delivered by the second charger unit. The second processing system may notify the first processing system if the discrepancy exceeds a threshold indicative of performance outside of tolerance and the first processing system may shut-down charging;
- Connection integrity (e.g. the integrity of the second charging circuit). If the second processing system consequently determines an integrity fault, it may notify the first processing system which may prevent charging or shut-down charging;
- Second communication line integrity. If the second processing system consequently determines an integrity fault of the second communication line, it may notify the first processing system which may prevent charging or shut-down charging;
- Electrical isolation of the battery charging system. If the second processing system consequently determines an isolation failure, it may notify the first processing system which may prevent charging or shut-down charging;
- Lock status of the second connection point with a cooperating second charger unit connection point of the second charger unit;
- Temperature of the second charging connection point and/or second charger unit connection point. If the second processing system consequently determines one or more temperatures out of tolerance, it may notify the first processing system which may prevent charging or shut-down charging or de-rate charging.

It may be a second monitoring processor of the second processing system that receives and monitors and optionally performs additional monitoring and/or communication (e.g. with the second charger unit) and/or control as described above.

It may be that the second control processor and the second monitoring processor are distinct processors.

In some embodiments, the first charging sub-system is arranged via electrical connection with the first charger unit, to allow charging of the common battery pack, even where there is no electrical connection of the second charging sub-system to the second charger unit.

Consequently, the first charging sub-system may operate with the first charger unit in isolation to charge the common battery pack.

In some embodiments, the first and second charging connection points are megawatt charging system, MCS, sockets.

The first and second charger units may be MCS charger units with MCS charger plugs with which the MSC sockets are arranged to cooperate for connection.

According to a second aspect of the invention there is provided a vehicle comprising the battery charging system according to the first aspect.

The vehicle may be a land vehicle and may be a heavy industrial vehicle such as a haul truck (e.g. used in mining). The invention may have particular application to larger, heavier vehicle, because they may have higher power needs and therefore benefit from systems offering higher charging rates.

In some embodiments, the vehicle comprises the common battery pack, where the common battery pack is used to power travel of the vehicle.

The vehicle may therefore be an electric vehicle, EV.

According to a third aspect of the invention there is provided a battery charger system comprising a first charger unit and a second charger unit, the first charger unit comprising:
a first charger unit connection point; and
a first charger unit circuit, and

the second charger unit comprising:
   a second charger unit connection point; and
   a second charger unit circuit, and
the first charger unit connection point being electrically connected with the first charger unit circuit and the second charger unit connection point being electrically connected with the second charger unit circuit,

where the first and second charger unit circuits are arranged to be electrically connected to a first electrical power source and a second electrical power source respectively and where further,
the first charger unit circuit is arranged, via the first charger unit connection point, to be selectively electrically connected with a first charging circuit of a first charging sub-system of a battery charging system and the second charger unit circuit is arranged, via the second charger unit connection point,
to be selectively electrically connected with a second charging circuit of second charging sub-system of the battery charging system,
to thereby permit charging of a common battery pack electrically connected to the first charging sub-system and second charging sub-system with current simultaneously delivered from the first and second charger units via the first and second charging sub-systems respectively.

The first and second electrical power sources may be the same power source or different power sources. The first and second electrical power sources may, at least ultimately, draw power from the same source, (e.g. a power grid), but may represent discrete connection points to such a source.

In some embodiments, the first charger unit and the second charger unit are structurally substantially identical.

In some embodiments, the first charger unit comprises a third processing system and a second communication line, where the third processing system communicates with a first processing system of the first charging sub-system in order to co-ordinate charging via the first (and optionally also the second) charging sub-system and where the second communication line extends between the third processing system and the first charger unit connection point where it is arranged to selectively make an electrical connection with a first communication line of the first charging sub-system, and where the communication between the first processing system and the third processing system occurs via the first and second communication lines.

In some embodiments, the battery charger system comprises a communication channel between the first and second charger units arranged for the exchange of information signals for the coordination of charging delivered between the first and second charger units.

The coordination may be at least in part such that each of the first and second charger units deliver substantially the same power at the same time to the common battery pack. The communication to achieve this may be between a fourth processing system of the second charger unit and the third processing system.

In order to achieve the balance of power delivery between the first and second charger units, it may be that DC/DC converters of the respective first and second charger units need to be balanced between the first and second charger units. The communication may form the basis of control to achieve the desired balance.

In some embodiments, the second charger unit comprises a third communication line corresponding with a fourth communication line of the second charging sub-system and arranged to be selectively electrically connected to that fourth communication line of the second charging sub-system at the second charger unit connection point, where the second charger unit is arranged to receive from the second charging sub-system, via the third communication line of the second charger unit, a signal indicating that the second charging sub-system is the second of two charging sub-systems of the battery charging system.

The signal may for instance be received at the point of connection of the second charging connection point and second charger unit connection point, or else prior to the commencement of charging.

The indication that the second charging sub-system is the second of two may be used by the battery charger system as a basis to increase the total maximum power deliverable to the battery charging system by the battery charger system and/or to notify a power generation network of anticipated increased demand corresponding to simultaneous charging using both the first and second charger units.

In some embodiments, the first and second charger unit connection points are megawatt charging system, MCS, plugs.

Indeed, the first and second charger units may themselves be MCS charger units.

According to a fourth aspect of the invention there is provided a method of charging a common battery pack, using:
a first charger unit of a battery charger system, the first charger unit being electrically connected to a first charging sub-system of a battery charging system via a first connection point, where the first charging sub-system is electrically connected to the common battery pack; and
a second charger unit of the battery charger system, the second charger unit being electrically connected to a second charging sub-system of the battery charging system via a second connection point, where the second charging sub-system is electrically connected to the common battery pack, the method comprising simultaneously delivering;

charging power from the first charger unit to the common battery pack via the first charging sub-system, and
charging power from the second charger unit to the common battery pack via the second charging sub-system.

The method may also comprise making the electrical connections at the first and second connection points.

According to a fifth aspect of the invention there is provided a computer program that, when read by a computer, causes performance of the method of the fourth aspect.

According to a sixth aspect of the invention there is provided a computer readable storage medium comprising computer readable instructions that, when read by a computer, cause performance of the method of the fourth aspect.

According to a seventh aspect of the invention there is provided a signal comprising computer readable instructions that, when read by a computer, cause performance of the method of the fourth aspect.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
**Figure 1** shows a perspective view of a vehicle according to an embodiment of the invention;
**Figure 2** shows a schematic view of a vehicle and a battery charger system in accordance with an embodiment of the invention;
**Figure 3** shows a schematic view of a first processing system according to an embodiment of the invention;
**Figure 4** shows a schematic view of a second processing system according to an embodiment of the invention; and
**Figure 5** shows method steps of a method according to an embodiment of the invention.

### DETAILED DESCRIPTION

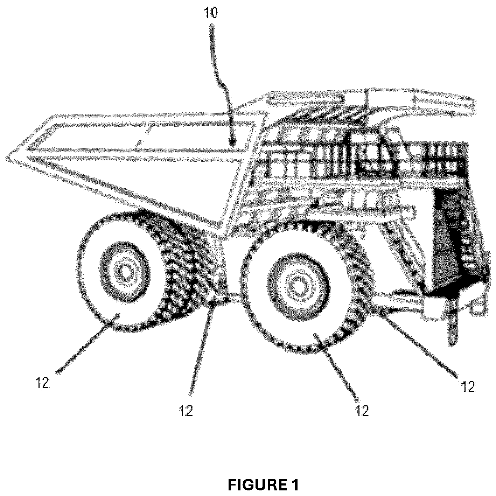

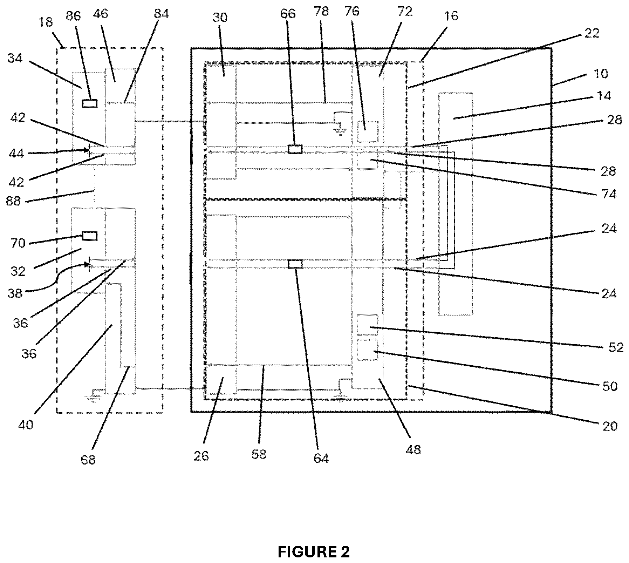

Referring to Figure 1, a battery electric vehicle, in this case a haul truck, is generally shown at 10. Travel of the vehicle 10 is driven by an electric motor which drives wheels 12 of the vehicle 10. The electric motor is powered by a common battery pack 14 (discussed further with respect to Figure 2).

Referring to Figure 2, the vehicle 10 is shown schematically together with a battery charger system 16.

The vehicle 10 has the common battery pack 14 and a battery charging system 18 to charge the common battery pack 14. The common battery pack 14 comprises a number of battery sub-packs each containing cells. All cells in the common battery pack 14 are however electrically connected to one another, such that the common battery pack forms a single battery for the purposes of charging (i.e. during charging) and indeed discharging. The battery charging system 18 has a first charging sub-system 20 (which may be considered a primary charging sub-system) and a second charging sub-system 22 (which may be considered a secondary charging sub-system). Each of the first 20 and second 22 charging sub-systems are arranged to deliver direct current (DC) power to the common battery pack 14 in order to charge it. The first 20 and second 22 charging sub-systems are structurally substantially identical, but have differences in terms of functionality (as explained below).

The first charging sub-system 20 has a first charging circuit 24 electrically connecting a positive terminal and a negative terminal of the common battery pack 14 to respective positive and negative pin sockets of a first charging connection point 26 of the first charging sub-system 20. Similarly, the second charging sub-system 22 has a second charging circuit 28 electrically connecting the positive terminal and the negative terminal of the common battery pack 14 to respective positive and negative pin sockets of a second charging connection point 30 of the second charging sub-system 22.

The battery charger system 16 is in this case provided in the form of a static charging station to which the vehicle 10 can travel for recharging. The battery charger system 16 has a first charger unit 32 (which may be considered a primary charger unit) and a second charger unit 34 (which may be considered a secondary charger unit). The first charger unit 32 is arranged to deliver DC power to the first charging sub-system 20 in order that the first charging sub-system 20 can deliver that DC power to the common battery pack 14. The second charger unit 34 is arranged to deliver DC power to the second charging sub-system 22 in order that the second charging sub-system 22 can deliver that DC power to the common battery pack 14. The first 32 and second 34 charger units are structurally substantially identical, but have differences in terms of functionality (as explained below).

The first charger unit 32 has a first charger unit circuit 36 electrically connecting a positive terminal and a negative terminal of a first electrical power source 38 to respective positive and negative pins of a first charger unit connection point 40 of the first charger unit 32. Similarly, the second charger unit 34 has a second charger unit circuit 42 electrically connecting a positive terminal and a negative terminal of a second electrical power source 44 to respective positive and negative pins of a second charger unit connection point 46 of the second charger unit 34.

The first charger unit connection point 40 and the first charging connection point 26 are arranged to be engaged with one another (in a plug and socket manner) such that the positive and negative pins of the first charger unit connection point 40 make respective electrical connections with the positive and negative pin sockets of the first charging connection point 26. Similarly, the second charger unit connection point 46 and the second charging connection point 30 are arranged to be engaged with one another (in a plug and socket manner) such that the positive and negative pins of the second charger unit connection point 46 make respective electrical connections with the positive and negative pin sockets of the second charging connection point 30.

The first charging sub-system 20 has a first processing system 48 arranged to control charging that occurs via both the first 20 and second 22 charging sub-systems. The first processing system 48 has a first control processor 50 and a first monitoring processor 52.

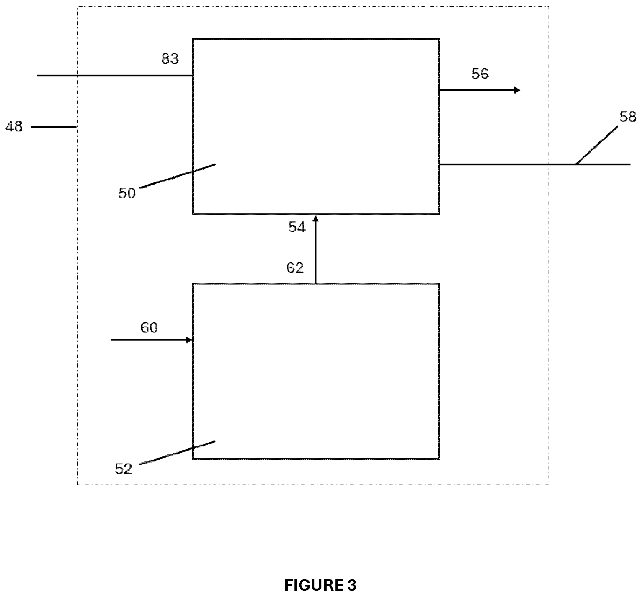

Referring to Figure 3, the first control processor 50 comprises a first control electrical input 54, a control electrical output 56 and a connection to a first communication line 58 extending between and electrically connecting the first control processor 50 and the first charging connection point 26. The first monitoring processor 52 comprises a first monitoring electrical input 60 and a first monitoring electrical output 62.

The monitoring electrical input 60 is electrically connected with a first sensor, in this case a first connection sensor arranged to monitor whether or not there is connection engagement of the first charging connection point 26 and the first charger unit connection point 40. As will be appreciated, the first connection sensor and its relationship with the first monitoring processor 52 is an example of many other such arrangements that may additionally or alternatively be provided for monitoring parts of the first charging sub-system 20 and/or charging occurring via the first charging sub-system 20. However, for simplicity, the present embodiment is described with only monitoring electrical input 60 and the first connection sensor.

The first monitoring electrical output 62 is electrically connected with the control electrical input 54. The control electrical output 56 is electrically connected with a first switching system 64 and a second switching system 66. The first switching system 64 forms part of the first charging circuit 24 and the second switching system 66 forms part of the second charging circuit 28. As will be appreciated, the first 64 and second 66 switching systems and their relationship with the first control processor 50 is an example of many other such arrangements that may additionally or alternatively be provided in terms of control of the first charging sub-system 20 and/or the second charging sub-system 22. However, for simplicity, the present embodiment is described with only control electrical output 56 and the first 64 and second 66 switching systems.

The first communication line 58 is connected at the first charging connection point 26 with a first communication pin socket. The first communication pin socket is arranged to be selectively engaged with a first communication pin of the first charger unit connection point 40 to make an electrical connection. The first pin socket of the first charger unit connection point 40 is electrically connected to a second communication line 68 of the first charger unit 32, which connects it to a third processing system 70 of the first charger unit 32.

The second charging sub-system 22 has a second processing system 72 similar to the first processing system 48 but having its charging control functionality over the charging process disabled. The second processing system 72 has a second control processor 74 and a second monitoring processor 76.

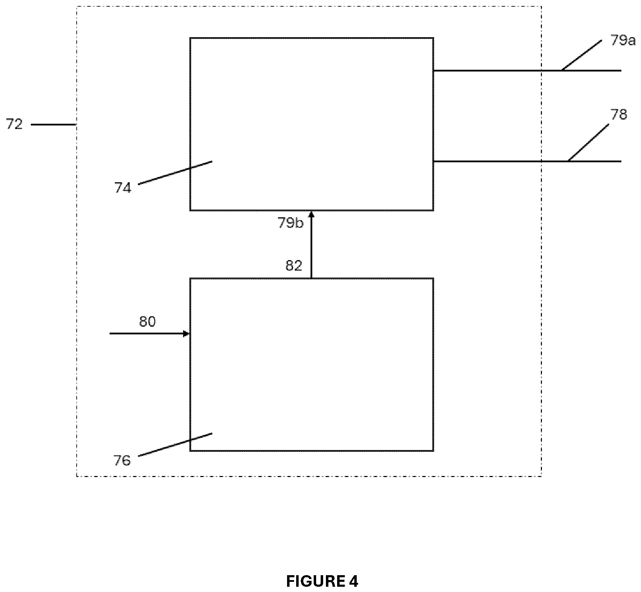

Referring to Figure 4, the second control processor 74 comprises a connection to a third communication line 78 extending between and electrically connecting the second control processor 74 and the second charging connection point 30. The second control processor 74 also has a inter-channel communication output 79a and a second control electrical input 79b. The second monitoring processor 76 comprises a second monitoring electrical input 80 and a second monitoring electrical output 82.

The second monitoring electrical input 80 is electrically connected with a second sensor, in this case a second connection sensor arranged to monitor whether or not there is connection engagement of the second charging connection point 30 and the second charger unit connection point 46. As will be appreciated, the second connection sensor and its relationship with the second monitoring processor 76 is an example of many other such arrangements that may additionally or alternatively be provided for monitoring parts of the second charging sub-system 22 and/or charging occurring via the second charging sub-system 22. However, for simplicity, the present embodiment is described with only the second monitoring electrical input 80 and the second connection sensor.

The second monitoring electrical output 82 is electrically connected with the second control electrical input 79b. The inter-channel communication output 79a is electrically connected with an inter-channel electrical input 83 of the first control processor 50.

The third communication line 78 is connected at the second charging connection point 30 with a second communication pin socket. The second communication pin socket is arranged to be selectively engaged with a second communication pin of the second charger unit connection point 46 to make an electrical connection. The second pin socket of the second charger unit connection point 46 is electrically connected to a fourth communication line 84 of the second charger unit 34, which connects it to a fourth processing system 86 of the second charger unit 34.

A communication channel 88 is provided between the first 32 and second 34 charger units (specifically the third 70 and fourth 86 processing systems) for communication between them, including for coordination of charging delivered.

All elements of the common battery pack 14, battery charger system 16 and battery charging system 18 are at least one of megawatt charging system (MCS) features and compatible with the mega watt charging standard. For instance, the first 32 and second 34 charger units are MCS charger units and the first charger unit connection point 40 and second charger unit connection point 46 are MCS plugs. Further, the first charging sub-system 20 and the second charging sub-system 22 are MCS charging systems and the first 26 and second 30 charging connection points are MCS charging sockets.

In use, the vehicle 10 is driven to the battery charger system 16 and is parked in a designated location. At this stage, the first 64 and second 66 switching systems are open (i.e. the first 24 and second 28 charging circuits are interrupted). A user plugs the second charger unit connection point 46 into the second charging connection port 30. This electrically connects the positive and negative pins of the second charger unit connection point 46 with the positive and negative pin sockets of the second charging connection point 30. Additionally, it electrically connects the second communication pin socket with the second communication pin.

As a consequence of the engagement of the second charger unit connection point 46 and the second charging connection port 30, a signal indicative of this is sent by the second sensor to the second monitoring processor 76 via the second monitoring electrical input 80. In consequence of determining that the second charger unit connection point 46 and the second charging connection port 30 are engaged, the second monitoring processor 76 sends a signal indicative of this to the second control processor 74 via the second monitoring electrical output 82. In response, the second control processor 74 sends a signal to the fourth processing system 86 of the second charger unit 34, via the third 78 and fourth 84 communication lines, indicating the connection of the second charging sub-system 22 and noting that the second charging sub-system is the second of two charging sub-systems. The fourth processing system 86 is thereby notified that it is anticipated that two MCS connections with simultaneous charging from each will occur. This alerts the fourth processing system 86 to the likely need for increased power draw from a power generation network by comparison with that expected if only a single MCS connection were made. The fourth processing system 86 consequently notifies the power generation network and notifies the third processing system 70 of the first charger unit 32, via the communication channel 88, that the second charging sub-system 22 has been connected to the second charger unit 34. In consequence, the third processing system 70 is alerted that coordinated charging with power delivered from both the first charger unit 32 and the second charger unit 34 is expected.

Then, the user plugs the first charger unit connection point 40 into the first charging connection port 26. This electrically connects the positive and negative pins of the first charger unit connection point 40 with the positive and negative pin sockets of the first charging connection point 26. Additionally, it electrically connects the first communication pin socket with the first communication pin.

It is worth noting that in other embodiments, the engaging of the second charger unit connection point 46 with the second charging connection port 30 and/or the engaging of the first charger unit connection point 40 and first charging connection port 26, need not be conducted manually. Rather, automation may be used (for instance by recognising the location of the first 26 and second 30 charging connection ports (e.g. using machine vision) and utilising a robot arm to advance the first 40 and second 46 charger unit connection points towards and into engagement with them). Further, whilst engaging the second charger unit connection point 46 and second charging connection port 30 before engaging the first charger unit connection point 40 and first charging connection port 26 may simplify matters, (i.e. because the intention for dual channel charging is implicit before there is the feasibility of commencing charging using only the first charger unit 32 and first charging sub-system 20) this approach need not be taken. For instance, substantially simultaneous engagement could be performed, or else even engagement of the first charger unit connection point 40 with the first charging connection port 26 first, where for instance a mechanism is provided for confirming a desired charging configuration (e.g. one or two channels).

As a consequence of the engagement of the first charger unit connection point 40 and the first charging connection port 26, a signal indicative of this is sent by the first sensor to the first monitoring processor 52 via the first monitoring electrical input 60. In consequence of determining that the first charger unit connection point 40 and the first charging connection port 26 are engaged, the first monitoring processor 52 sends a signal indicative of this to the first control processor 50 via the first monitoring electrical output 62. In response, the first control processor 50 sends a signal to the third processing system 70 of the first charger unit 40, via the first 58 and second 68 communication lines, indicating the connection of the first charging sub-system 20. In response, the third processing system 70 sends a signal via the second 68 and first 58 communication lines to the first control processor 50, indicating that the second charger unit connection point 46 and the second charging connection port 30 have been engaged and that therefore two channel charging is required. Consequently, the first control processor 50 is alerted that it will control charging via both channels.

In most embodiments it is likely that a sequence of various checks, notifications, requests, negotiations and/or confirmations will occur between at least some of the processing systems and utilising various sensors, in order to set the conditions for charging and to ensure charging conditions/safety are achieved. For instance:
- locking of the first and second charging connection points respectively with the first and second charger unit connection points;
- communicating operating limits and parameters of charging;
- requesting initial current and/or voltage;
- requesting power delivery;
- receiving a ready confirmation; and
- sending a proceed signal.

These steps are not discussed in detail in relation to the present embodiment because they are well-known. Nonetheless, it is worth noting that data and/or findings arising from monitoring performed by the second monitoring processor 76 (i.e. with respect to elements of the second charging sub-system 22), may be relayed to the first control processor 50, via the inter-channel communication output 79a and inter-channel communication input 83, in order that the first control processor 50 may instigate/control corresponding functionality (e.g. adjustments) in accordance with the relevant data/findings. The first control processor 50 may take control measures (in response to findings relating to either channel (e.g. the first charging sub-system 20 or the second charging sub-system 22) in collaboration with or in accordance with instructions from the third processing system 70.

In the case of the present embodiment, the initial current and/or voltage requested is to be shared in terms of delivery between the first charger unit 32 in combination with the first charging sub-system 20 and the second charger unit 34 in combination with the second charging sub-system 22. This split in delivery is instructed by the first control processor 50 to the third processing system 70 via the first communication line 58 and the second communication line 68. The third processing system 70 coordinates both the initial split in power delivery and ongoing maintenance of this split during charging with the fourth processing system 86 via the communication channel 88. Specifically, the split is maintained such that each of the first 32 and second 34 charger units deliver substantially the same power at the same time to the common battery pack 14. More specifically, this is achieved by balancing DC/DC converters of the respective first 32 and second 34 charger units.

To facilitate commencement of charging, the first control processor 50 sends signals to instigate the closing of the first switching system 64 and the second switching system 66, to thereby complete the first charging circuit 24 and second charging circuit 28. Simultaneous delivery of current is then activated by the third processing system 70 in respect of the first charger unit 32 and the fourth processing system 86 in respect of the second charger unit 34. In a first or primary channel, current consequently flows in a circuit from the positive terminal of the first electrical power source 38 through a positive side of the first charger unit circuit 36, through the positive pin of the first charger unit connection point 40, through the positive pin of the first charging connection point 26, through a positive side of the first charging circuit 24, into the positive terminal of the common battery pack 14, thereby charging the common battery pack 14, through the negative terminal of the common battery pack 14, through a negative side of the first charging circuit 24, through the negative pin of the first charging connection point 26, through the negative pin of the first charger unit connection point 40, through a negative side of the first charger unit circuit 36 and to the negative terminal of the first electrical power source 38. Similarly, in a second or secondary channel, current consequently flows in a circuit from the positive terminal of the second electrical power source 44 through a positive side of the second charger unit circuit 42, through the positive pin of the second charger unit connection point 46, through the positive pin of the second charging connection point 30, through a positive side of the second charging circuit 28, into the positive terminal of the common battery pack 14, thereby charging the common battery pack 14, through the negative terminal of the common battery pack 14, through a negative side of the second charging circuit 28, through the negative pin of the second charging connection point 30, through the negative pin of the second charger unit connection point 46, through a negative side of the second charger unit circuit 42 and to the negative terminal of the second electrical power source 44.

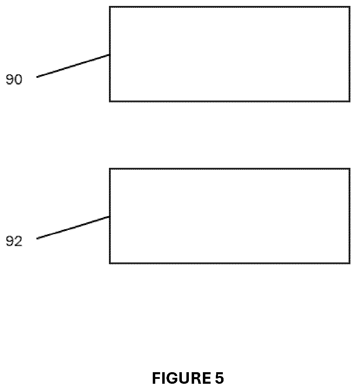

Consequently, a method of charging the common battery pack 14 comprises simultaneously performed steps of delivering charging power from the first charger unit 32 to the common battery pack 14 via the first charging sub-system 20 (see step 90 in Figure 5) and delivering charging power from the second charger unit 34 to the common battery pack 14 via the second charging sub-system 22 (see step 92 of Figure 5).

In most embodiments, throughout the charging process, it is likely that monitoring will occur, particular by the first 52 and second 76 monitoring processors and utilising various sensors, in order to ensure that the charging process is proceeding within expected tolerances and is safe. For instance:
∘ Monitoring of voltage and/or current being delivered;
∘ Monitoring of any discrepancy between requested current and current delivered;
∘ Monitoring the state of charge of the common battery pack 14;
∘ Connection integrity;
∘ The integrity of the first 58 and/or second 78 communication lines;
∘ Electrical isolation;
∘ Temperature at one or more locations.

Such monitoring activities and steps taken in response to monitoring findings are not discussed in detail in relation to the present embodiment because they are well-known. Nonetheless, it is worth noting that data and/or findings arising from monitoring performed by the second monitoring processor 76 (i.e. with respect to elements of the second charging sub-system 22), may be relayed to the first control processor 50, via the inter-channel communication output 79a and inter-channel communication input 83, in order that the first control processor 50 may instigate/control corresponding functionality (e.g. adjustments) in accordance with the relevant data/findings. The first control processor 50 may take control measures (in response to findings relating to either channel (e.g. the first charging sub-system 20 or the second charging sub-system 22) in collaboration with or in accordance with instructions from the third processing system 70.

At the completion of the charging process (e.g. when monitored state of charge indicates that the common battery pack is charged), the first control processor 50 instigates breaking of the first 24 and second 28 charging circuits via actuation of the first switching system 64 and the second switching system 66.

The user then disconnects the second charger unit connection point 46 from the second charging connection port 30 and the first charger unit connection point 40 from the first charging connection port 26 and the vehicle 10 is free to drive away. As will be appreciated, in other embodiments, these disconnections may be automated (e.g. automated retraction of a robot arm).

The approach described above may allow adherence to MCS norms in terms of procedures and equipment. Additionally, it may allows for the common battery pack 14 of the vehicle 10 to be charged significantly more quickly. The approach allows adaptation of the MCS approach to overcome the difficulty of charging a common battery pack, using two charging channels, using standard equipment the design of which was conducted with single channel charging in mind.

It will be appreciated that various changes and modifications can be made to the present invention without departing from the scope of the present application.

## Claims

1. A battery charging system comprising a first charging sub-system and a second charging sub-system, the first charging sub-system comprising:
a first charging connection point; and
a first charging circuit, and
the second charging sub-system comprising:
a second charging connection point; and
a second charging circuit,
the first charging connection point being electrically connected with the first charging circuit and the second charging connection point being electrically connected with the second charging circuit,
where the first and second charging circuits are arranged to be electrically connected to a common battery pack and where further,
the first charging circuit is arranged to be selectively electrically connected, via the first charging connection point, with a first charger unit circuit of a first charger unit of a battery charger system and the second charging circuit is arranged to be selectively electrically connected, via the second charging connection point, with a second charger unit circuit of a second charger unit of the battery charger system,
to thereby permit charging of the common battery pack with current simultaneously delivered from the first and second charger units via the first and second charging sub-systems respectively.

2. The battery charging system of claim 1 where the first charging sub-system and the second charging sub-system are structurally identical.

3. The battery charging system of claim 1 or claim 2 where the first charging sub-system comprises a first processing system arranged to control charging that occurs via both the first and second charging sub-systems, the control comprising controlling completion of the first charging circuit and the second charging circuit via actuation of a first switching system of the first charging sub-system and a second switching system of the second charging sub-system respectively.

4. The battery charging system of claim 3 comprising a first communication line extending between the first processing system and the first charging connection point and arranged to be used by the first processing system to perform communication with the first charger unit via a selectively made electrical connection of the first communication line with a corresponding second communication line of the first charger unit at the first charging connection point, the first processing system control of the charging via both the first and second charging sub-systems being performed at least in part via the first and second communication lines.

5. The battery charging system of any of claims 3 to 4 where the second charging sub-system comprises a second processing system that is the same as the first processing system but having charging control functionality disabled to complement charging control via both the first and second charging sub-systems being performed by the first processing system.

6. The battery charging system of claim 5 comprising a third communication line extending between the second processing system and the second charging connection point and arranged to be used by the second processing system to perform communication with the second charger unit via a selectively made electrical connection of the third communication line with a corresponding fourth communication line of the second charger unit at the second charging connection point and where the second processing system is arranged to use the third and fourth communication lines to send a signal to the second charger unit indicating that the second charging sub-system to which it belongs is the second of two charging sub-systems of the battery charging system.

7. The battery charging system of any preceding claim where the first charging sub-system is arranged via electrical connection with the first charger unit, to allow charging of the common battery pack, even where there is no electrical connection of the second charging sub-system to the second charger unit.

8. A vehicle comprising the battery charging system according to any of claims 1 to 7.

9. A battery charger system comprising a first charger unit and a second charger unit, the first charger unit comprising:
a first charger unit connection point; and
a first charger unit circuit, and
the second charger unit comprising:
a second charger unit connection point; and
a second charger unit circuit, and
the first charger unit connection point being electrically connected with the first charger unit circuit and the second charger unit connection point being electrically connected with the second charger unit circuit,
where the first and second charger unit circuits are arranged to be electrically connected to a first electrical power source and a second electrical power source respectively and where further,
the first charger unit circuit is arranged, via the first charger unit connection point, to be selectively electrically connected with a first charging circuit of a first charging sub-system of a battery charging system and the second charger unit circuit is arranged, via the second charger unit connection point,
to be selectively electrically connected with a second charging circuit of second charging sub-system of the battery charging system,
to thereby permit charging of a common battery pack electrically connected to the first charging sub-system and second charging sub-system with current simultaneously delivered from the first and second charger units via the first and second charging sub-systems respectively.

10. The battery charger system according to claim 9 where the first charger unit comprises a third processing system and a second communication line, where the third processing system communicates with a first processing system of the first charging sub-system in order to co-ordinate charging via the first (and optionally also the second) charging sub-system and where the second communication line extends between the third processing system and the first charger unit connection point where it is arranged to selectively make an electrical connection with a first communication line of the first charging sub-system, and where the communication between the first processing system and the third processing system occurs via the first and second communication lines.

11. The battery charger system of claim 10 comprising a communication channel between the first and second charger units arranged for the exchange of information signals for the coordination of charging delivered between the first and second charger units.

12. The battery charger system of claim 10 or claim 11 where the second charger unit comprises a third communication line corresponding with a fourth communication line of the second charging sub-system and arranged to be selectively electrically connected to that fourth communication line of the second charging sub-system at the second charger unit connection point, where the second charger unit is arranged to receive from the second charging sub-system, via the third communication line of the second charger unit, a signal indicating that the second charging sub-system is the second of two charging sub-systems of the battery charging system.

13. A method of charging a common battery pack, using:
a first charger unit of a battery charger system, the first charger unit being electrically connected to a first charging sub-system of a battery charging system via a first connection point, where the first charging sub-system is electrically connected to the common battery pack; and
a second charger unit of the battery charger system, the second charger unit being electrically connected to a second charging sub-system of the battery charging system via a second connection point, where the second charging sub-system is electrically connected to the common battery pack,
the method comprising simultaneously delivering;
charging power from the first charger unit to the common battery pack via the first charging sub-system, and
charging power from the second charger unit to the common battery pack via the second charging sub-system.

14. A computer program that, when read by a computer, causes performance of the method as claimed in claim 13.

15. A non-transitory computer readable storage medium comprising computer readable instructions that, when read by a computer, cause performance of the method as claimed in claim 13.
